# EUROPEAN PATENT SPECIFICATION

(11) **EP 2 090 417 B1**
(45) Date of publication and mention of the grant of the patent: **04.05.2011**
(21) Application number: 08002632.1
(22) Date of filing: 13.02.2008
(51) Int. Cl.: B29C 45/00, F16J 15/32, F16J 15/44

(54) **Seal ring**
Dichtungsring
Bague d'étanchéité

(43) Date of publication of application: 19.08.2009
(73) Proprietor: GM Global Technology Operations, Inc., Detroit MI 48265-3 (US)
(72) Inventor: Bordenet, Gilles, 67300 Schiltigheim (FR); Ponte, Yann, 67380 Lingolsheim (FR)
(74) Representative: Kraenzmer, Martin

(56) References cited:
- JP-A- 63 237 922
- US-A- 5 628 519
- US-A1- 2004 251 634
- US-B1- 6 562 272

## Description

The invention concerns a seal ring, especially for use in automatic transmissions.

Seal rings are used in many technical fields. In automatic transmissions for example, seal rings are used in order to avoid hydraulic leakage between channels. As there a high pressures in the channels, imperfections of the seal rings lead to leakage between the channels.

It is known from US 5,628,519 A, a seal ring having uniform dimensions over the entire length therof is described. This is achieved by properly positioning the injection point for injecting a material when injection-molding the seal ring. More specifically, the injection point is angularly displaced from the center of the entire length of the seal ring by ±1° to ±30°.

US 2004/0251634 A1 discloses a seal ring which can be prevented from being broken by an expansion and a shock applied thereto when the seal ring is fitted on a rotary shaft.

JP 63-237922 A discloses a filmy holding plate whose both ends are formed on a circumferal wall of a through hole of a molded product composed of synthetic resin.

US 6,562,272 B1 discloses an apparatus and method for providing delamination-resistant, array type molding of chip laminate packages.

The objective of the invention is to provide a seal ring which tends less to leakage than known seal rings.

This objective is attained according to the invention in that a seal ring according to claim 1 is provided.

The invention is based on the consideration that it is the presence of ejector traces, especially ejector pin marks, on the sealing surface of the seal ring to which the leakage is due. These ejector traces come from the injection process in which the seal ring is produced. Ejector pins are necessary in order to get the seal ring out of the cavity of the mould after the injection-molding. As ejector pins can not be avoided, the invention proposes therefore to displace the ejector pins from the sealing surface of the seal ring and to place them elsewhere improving thereby the flatness of the sealing surface. As they are no more on the sealing surface, they do not affect any more the sealability.

The invention provides seal rings with improved sealability and pressure stability. When used in automatic transmissions, these seal rings improve the drivability and better pressure stability during the shifting.

The ejector pins are removed from the sealing surface thereby allowing to have a flat surface without ejector pin traces or any burr on the outer side of the seal ring which is pressed against the housing in order to avoid any leakage.

When the seal ring is out of the cavity of the mold, the tabs are cut and it may occur that burrs remain. Upon placing the tabs with the ejector pins in recess areas on the inner side of the seal ring, it is made sure that any remaining burrs are within the recess area where they do not disturb the function of the seal ring.

The invention also provides a process for fabricating a seal ring, especially for use in automatic transmissions, by injection-molding, with the following steps:
- Providing a mold for a seal ring with a plurality of recesses in the inner side of the seal ring, in each recess a tab with an ejector pin being placed,
- Injecting a material into the mold thereby injection-molding a seal ring,
- When the seal ring is hardened, seizing the seal ring on the ejector pins and extracting the seal ring from the mold,
- Cutting the tabs close to the wall of the inner side of the seal ring.

This process allows to obtain seal rings with a very flat sealing surface assuring good sealability.

The invention is hereafter explained in detail with reference to the drawings which represent
FIGURES 1a and b schematic views of a seal ring according to the invention and a seal ring according to the prior art.
FIGURES 2a and b schematic views of a seal ring according to the invention and a seal ring according to the prior art placed between two channels in an automatic transmission.

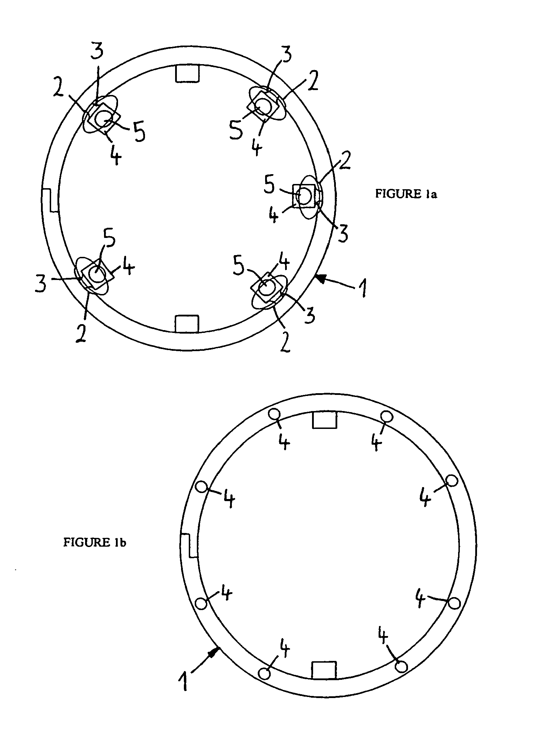

In FIGURES 1a and 1b, the design of the seal ring in its injection-molded state is shown. It can be seen from FIGURE 1a, that the seal ring 1 has a plurality of recesses 2 (here eight recesses 2) regularly distributed over the inner surface of the seal ring. The recesses 2 have the shape of circle segments. In the middle of each recess 2, a tab 3 is placed at the free end of which an ejector pin 4 is formed. The ejector pins 4 have a central hole 5 which allows the ejector to seize the ejector pins 4 in order to extract the hardened seal ring 1 from the mold after injection-molding thereof.

FIGURE 1b shows a seal ring 1 according to the prior art. On this seal ring 1, the ejector pins 4 are placed on the side of the seal ring 1. When they are cut after having used for seizing the seal ring 1 in order to extract it from the injection mold, ejector pin marks and burrs may remain on the surface of the seal ring 1 affecting the sealability thereof.

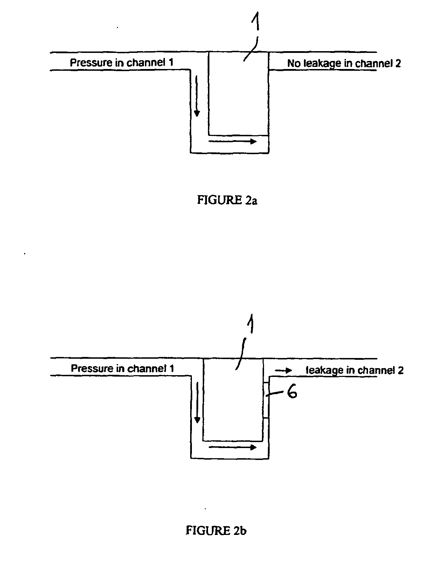

FIGURE 2a shows a seal ring 1 according to the invention placed between two channels (channel 1, channel 2) of an automatic transmission. It can be seen from FIGURE 2a that the seal ring 1 is pressed against the wall between channel 1 and channel 2 and thereby seals channel 1 from channel 2 with almost the whole sealing surface pressed against the wall.

Even if the hydraulic liquid in channel 1 is under high pressure, the seal ring 1 assures a good sealability.

FIGURE 2b shows a seal ring 1 according to the prior art which is placed like the seal ring 1 of FIGURE 2a in order to seal a channel 1 from a channel 2. This seal ring 1 has an ejector trace 6 on its sealing surface (the surface which is pressed against the wall between channel 1 and channel 2). Due to this ejector trace 6, there is a leakage between channel 1 and channel 2.

## Claims

1. A seal ring (1), especially for use in automatic transmissions, **characterized in that**
the seal ring (1) has a plurality of recesses (2) regularly distributed over the inner surface of the seal ring, the recesses (2) having the shape of circle segments, wherein in the middle of each recess (2) a tab (3) is placed at the free end of which an ejector pin (4) is formed, the ejector pins (4) having a central hole (5) which allows an ejector to seize the ejector pins (4) in order to extract the hardened seal ring (1) from a mold after injection-molding thereof.

2. Process for fabricating a seal ring (1), especially for use in automatic transmissions, by injection-molding, with the following steps:
- Providing a mold for a seal ring (1) with a plurality of recesses (2) in the inner side of the seal ring (1), in each recess (2) a tab (3) with an ejector pin (4) being placed,
- Injecting a material into the mold thereby injection-molding a seal ring (1),
- When the seal ring (1) is hardened, seizing the seal ring on the ejector pins (4) and extracting the seal ring (1) from the mold,
- Cutting the tabs (3) close to the wall of the inner side of the seal ring (1).

## Patentansprüche

1. Dichtungsring (1), insbesondere zur Verwendung in Automatikgetrieben, **dadurch gekennzeichnet, dass** der Dichtungsring (1) eine Vielzahl von Vertiefungen (2) aufweist, die regelmäßig über die Innenfläche des Dichtungsrings verteilt sind, wobei die Vertiefungen (2) die Form von Kreissegmenten aufweisen, wobei in der Mitte jeder Vertiefung (2) ein Einsatz (3) angeordnet ist, an dessen freiem Ende ein Ausstoßstift (4) gebildet ist, wobei die Ausstoßstifte (4) eine mittige Öffnung (5) aufweisen, die es einer Ausstoßvorrichtung ermöglichen, die Ausstoßstifte (4) zu ergreifen, um die ausgehärteten Dichtungsringe (1) nach deren Spritzgießen aus einer Form zu nehmen.

2. Verfahren zur Herstellung eines Dichtungsrings (1), insbesondere zur Verwendung in Automatikgetrieben, durch Spritzguss, mit den folgenden Schritten:
- Bereitstellen einer Form für einen Dichtungsring (1) mit einer Vielzahl von Vertiefungen (2) in der Innenseite des Dichtungsrings (1), wobei in jeder Vertiefung (2) ein Einsatz (3) mit einem Ausstoßstift (4) angeordnet ist,
- Einspritzen eines Materials in die Form, wodurch ein Dichtungsring (1) spritzgegossen wird,
- wenn der Dichtungsring (1) ausgehärtet ist, Ergreifen des Dichtungsrings an den Ausstoßstiften (4) und Herausziehen des Dichtungsrings (1) aus der Form,
- Abschneiden der Einsätze (3) in der Nähe der Wand der Innenseite des Dichtungsrings (1).

## Revendications

1. Joint d'étanchéité (1), destiné en particulier à être utilisé dans des transmissions automatiques, **caractérisé en ce que** le joint d'étanchéité (1) comporte une pluralité de creux (2) répartis régulièrement sur sa surface intérieure, lesquels creux (2) sont en forme de segments de cercle, une patte (3) étant placée au milieu de chaque creux (2) et portant formée à son extrémité libre une goupille d'éjection (4), les goupilles d'éjection (4) possédant un trou central (5) qui permet à un éjecteur de saisir les goupilles d'éjection (4) pour extraire le joint d'étanchéité solidifié (1) d'un moule après le moulage par injection de celui-ci.

2. Procédé pour la fabrication d'un joint d'étanchéité ring (1), destiné en particulier à être utilisé dans des transmissions automatiques, par moulage par injection, comprenant les étapes suivantes :
- fourniture d'un moule pour un joint d'étanchéité (1) avec une pluralité de creux (2) sur la face intérieure du joint d'étanchéité (1), une patte (3) avec une goupille d'éjection (4) étant placée dans chaque creux (2),
- injection d'un matériau dans le moule pour mouler par injection un joint d'étanchéité (1),
- quand le joint d'étanchéité (1) est solidifié, préhension du joint d'étanchéité au niveau des goupilles d'éjection (4) et extraction du joint d'étanchéité (1) du moule,
- recoupe des pattes (3) près de la paroi de la face intérieure du joint d'étanchéité (1).
